# EUROPÄISCHE PATENTANMELDUNG

(11) **EP 3 872 290 A1**
(43) Veröffentlichungstag der Anmeldung: **01.09.2021**
(21) Anmeldenummer: 21155809.3
(22) Anmeldetag: 08.02.2021
(51) Int. Cl.: E05F 15/41

(54) **VERFAHREN ZUR HINDERNISERKENNUNG BEI EINER ZUGANGSVORRICHTUNG**

(30) Priorität: 28.02.2020 DE 102020105319
(71) Anmelder: Gebr. Bode GmbH & Co. KG, 34123 Kassel (DE)
(72) Erfinder: Andler, Daniel, 34266 Niestetal (DE); Bachmann, Guido, 34302 Guxhagen (DE)
(74) Vertreter: Patentanwälte Bauer Vorberg Kayser

(57) **Zusammenfassung**

Die Erfindung betrifft ein Verfahren zur zustandsbasierten Instandhaltung einer Zugangsvorrichtung (2a, b) eines Fahrzeugs (1), insbesondere eines Fahrzeugs (1) des öffentlichen Personenverkehrs, wobei die Zugangsvorrichtung (2a, b) ein bewegliches Element (3a, b) und einen elektrischen Antrieb (4a, b) zum Verstellen des beweglichen Elements (3a, b) umfasst und an dem Fahrzeug (1) befestigt ist, wobei der Antrieb (4a, b) mit Steuersignalen (5a, b) angesteuert wird, wobei basierend auf einem erfassten Zustand der Zugangsvorrichtung (2a, b) Ist-Zustandssignale (9a, b) zur Beschreibung des Zustands erzeugt werden, wobei die Steuersignale (5a, b) auf ein physikalisches Simulationsmodell (11) zur rechnerischen Simulation der Zugangsvorrichtung (1) und zur Ermittlung erwarteter Soll-Zustandssignale (12a, b) angewandt werden und wobei basierend auf einem Vergleich zwischen den Ist-Zustandssignalen (9a, b) und zugehörigen Soll-Zustandssignalen (12a, b) ein Instandhaltungszustand der Zugangsvorrichtung (2a, b) bestimmt wird, dadurch gekennzeichnet, dass basierend auf dem Vergleich zwischen den Ist-Zustandssignalen (9a, b) und den zugehörigen Soll-Zustandssignalen das Simulationsmodell (11) angepasst wird.

## Beschreibung

Die Erfindung betrifft ein Verfahren zur Hinderniserkennung bei einer Zugangsvorrichtung eines Fahrzeugs.

Zugangsvorrichtungen wie Schiebetüren insbesondere bei Fahrzeugen des öffentlichen Personenverkehrs weisen regelmäßig eine Hinderniserkennung auf. Diese Funktionalität dient dazu, bei der Verstellung eines beweglichen Elements wie z.B. eines Türflügels der Zugangsvorrichtung ein Hindernis im Bewegungsweg oder Verstellweg des beweglichen Elements zu erkennen. Eine solche Hinderniserkennung kann einerseits durch Sensoren wie z. B. Drucksensoren oder eine Lichtschranke erfolgen, welche direkt das Vorhandensein eines Hindernisses erkennen können. Ein weiterer Ansatz zur Hinderniserkennung, welcher alternativ oder zusätzlich zu dem Einsatz eines direkten Sensors gebraucht werden kann, sieht vor, Zustandssignale der Zugangsvorrichtung auszuwerten. Bei einem elektrischen Antrieb können dies etwa die angelegte Spannung sowie ein gemessener Strom durch den Antrieb sein. Diese Zustandssignale können dann mit vordefinierten Grenzwerten verglichen werden, welche z. B. einen Bereich für eine Verstellung des beweglichen Elements ohne Hindernis beschreiben. Liegen die Zustandssignale dann außerhalb dieses Bereichs, wird das Vorhandensein eines Hindernisses erkannt. Daraufhin kann die weitere Verstellung des beweglichen Elements gestoppt und ggf. eine Rückverstellung von dem Hindernis weg eingeleitet werden.

Nachteilig an diesem Ansatz ist, dass die Auswirkungen einer Degradation der Zugangsvorrichtung nicht berücksichtigt werden. Grundsätzlich erfolgt bei praktisch allen technischen Vorrichtungen mit zunehmender Betriebsdauer eine Degradation, welche über kurz oder lang zu einem Ausfall und damit dazu führt, dass die Vorrichtung insgesamt oder wesentliche Teile der Vorrichtung repariert oder ausgetauscht werden müssen, bevor ein Weiterbetrieb der Vorrichtung möglich und erlaubt ist.

Aber auch in frühen Stadien der Degradation, welche an sich weder eine Reparatur noch eine Wartung der Zugangsvorrichtung erforderlich machen, treten bereits Veränderungen im Verhalten der Zugangsvorrichtung auf.

Daher besteht die Aufgabe der vorliegenden Erfindung darin, Verfahren zur Hinderniserkennung bei einer Zugangsvorrichtung eines Fahrzeugs dahingehend zu verbessern, dass die Auswirkungen einer Degradation der Zugangsvorrichtung besser für die Hinderniserkennung berücksichtigt werden können.

Bezogen auf ein Verfahren zur Hinderniserkennung bei einer Zugangsvorrichtung eines Fahrzeugs wird diese Aufgabe durch die Merkmale des Anspruchs 1 gelöst.

Wesentlich für die Erfindung ist die Erkenntnis, dass ein rechnerisches Modell zur Simulation des Verhaltens der Zugangsvorrichtung, welches Modell die Vergleichsgrundlage für die Hinderniserkennung liefert, nicht als konstant fixiert angesetzt werden braucht, sondern im Laufe der Degradation der Zugangsvorrichtung auch selbst angepasst werden kann. Die Anpassung des Modells drückt sich insbesondere in einer Veränderung der Vorhersagen des Modells aus. Somit können die für die Hinderniserkennung verarbeiteten Werte mit Referenz- oder Grenzwerten verglichen werden, welche nicht fixiert sind, sondern welche im Laufe der ermittelten Degradation der Zugangsvorrichtung entsprechend angepasst werden.

Das erfindungsgemäße Verfahren dient der Hinderniserkennung bei einer Zugangsvorrichtung eines Fahrzeugs. Bei diesem Fahrzeug kann es sich um ein Fahrzeug des öffentlichen Personenverkehrs handeln. Gemäß dem erfindungsgemäßen Verfahren umfasst die Zugangsvorrichtung ein bewegliches Element und einen elektrischen Antrieb zum Verstellen des beweglichen Elements und ist an dem Fahrzeug befestigt, wobei der Antrieb mit Steuersignalen zum Verstellen des beweglichen Elements angesteuert wird. Erfindungsgemäß werden basierend auf einem erfassten Zustand der Zugangsvorrichtung Ist-Zustandssignale zur Beschreibung des Zustands erzeugt, wobei die Steuersignale auf ein physikalisches Simulationsmodell zur rechnerischen Simulation der Zugangsvorrichtung und zur Ermittlung erwarteter Soll-Zustandssignale angewandt werden. Das Simulationsmodell dient der Simulation und der Modellierung physikalischer Zustände, ist aber nicht selbst physikalisch, da es aus Daten ggf. in Kombination mit Algorithmen besteht.

Der Ausdruck Ist-Zustandssignale ist hier so zu verstehen, dass es sich um Zustandssignale zur Beschreibung eines erfassten und damit tatsächlichen Zustands handelt. Die Soll-Zustandssignale hingegen beschreiben einen gemäß Simulationsmodell erwarteten Zustand. Gemäß dem erfindungsgemäßen Verfahren wird basierend auf einem Vergleich zwischen den Ist-Zustandssignalen und den zugehörigen Soll-Zustandssignalen ein Hinderniszustand bei der Verstellung des beweglichen Elements erkannt.

Regelmäßig gibt es mindestens zwei Hinderniszustände, welche erkannt werden können, nämlich "Hindernis erkannt" und "kein Hindernis erkannt". Grundsätzlich kann es aber beliebig viele Hinderniszustände geben, welche erkannt werden können. Dabei kann jeder Hinderniszustand auch einer jeweils unterschiedlichen Wahrscheinlichkeit dafür entsprechen, dass es Hindernis vorliegt.

Bei dem erfindungsgemäßen Verfahren wird basierend auf den Ist-Zustandssignalen und den zugehörigen Soll-Zustandssignalen das Simulationsmodell angepasst. Eine solche Anpassung bedeutet, dass nach der Anpassung zumindest für einige Steuersignale andere Soll-Zustandssignale ermittelt werden als vor der Anpassung des Simulationsmodells. Anders ausgedrückt führt die Anpassung dazu, dass das Simulationsmodell - als Funktion verstanden - eine veränderte Abbildung zwischen den Eingangs- und den Ausgangswerten liefert. Bevorzugt wird das Simulationsmodell basierend auf einem ggf. weiteren Vergleich zwischen den Ist-Zustandssignalen und den zugehörigen Soll-Zustandssignalen angepasst.

Da das Simulationsmodell selbst durch diese ggf. wiederholten Anpassungen die Degradation und damit den Lebenszyklus der Zugangsvorrichtung durchläuft, kann das Simulationsmodell auch als digitaler Zwilling der Zugangsvorrichtung bezeichnet werden.

Grundsätzlich können die Kriterien zum Auslösen dieser Anpassung beliebig gewählt werden. So erfolgt regelmäßig keine Anpassung des Simulationsmodells, wenn die Ist-Zustandssignale den zugehörigen Soll-Zustandssignalen im Wesentlichen vollständig entsprechen. In diesem Fall ist davon auszugehen, dass das Simulationsmodell in seinem aktuellen Zustand die Zugangsvorrichtung hinreichend genau abbildet.

Bevorzugt ist, dass das Simulationsmodell dann angepasst wird, wenn der Vergleich zwischen den Ist-Zustandssignalen und den Soll-Zustandssignalen ein vordefiniertes Kriterium erfüllt. Insbesondere kann es sein, dass das Simulationsmodell angepasst wird, wenn eine Abweichung zwischen den Ist-Zustandssignalen und den Soll-Zustandssignalen eine vordefinierte Schwelle überschreitet. Wenn eine hinreichend große Abweichung zwischen den gemessenen Ist-Zustandssignalen und den von dem Simulationsmodell ermittelten Soll-Zustandssignalen vorliegt, kann das darauf hindeuten, dass das Simulationsmodell die tatsächlichen Gegebenheiten nicht mehr hinreichend genau angibt und daher angepasst werden sollte. Dabei kann anhand weiterer Kriterien unterschieden werden, ob eine solche Abweichung in dem Vorliegen eines Hindernisses oder in einer Degradation begründet ist.

Die Art der Anpassung des Simulationsmodells ist grundsätzlich ebenfalls beliebig. Bevorzugt ist, dass eine Vielzahl von Kriterien vordefiniert sind und dass das Simulationsmodell jeweils unterschiedlich angepasst wird, je nachdem welches der Vielzahl von vordefinierten Kriterien erfüllt ist. Die Kriterien können jeweils einem bestimmten Zustand und insbesondere einem bestimmten Degradationszustand der Zugangsvorrichtung entsprechen, sodass bei einem Erfüllen eines bestimmten Kriteriums das Simulationsmodell so angepasst wird, dass es dem zugeordneten Degradationszustand entspricht.

Grundsätzlich kann die Anpassung des Simulationsmodells auch durch eine neue Erstellung des Simulationsmodells erfolgen. Es kann also sein, dass das angepasste Simulationsmodell keinen direkten Bezug zu dem Simulationsmodell vor der Anpassung aufweist. Es kann aber auch sein, dass die Möglichkeit einer Anpassung bereits in dem Simulationsmodell selbst vorgesehen ist. So ist eine bevorzugte Ausführungsform des Verfahrens dadurch gekennzeichnet, dass das Simulationsmodell ein parametriertes Simulationsmodell ist, sodass die Soll-Zustandssignale basierend auf mindestens einem Parameter zur Beschreibung einer Degradation der Zugangsvorrichtung ermittelt werden. Der durch das Simulationsmodell beschriebene Degradationszustand wird dann einfach durch einen solchen Parameter beschrieben. Vorzugsweise handelt es sich bei dem Parameter um einen Zahlenwert oder um ein Tupel von Zahlenwerten. Dieser Parameter kann prinzipiell beliebig gewählt werden. Bevorzugt ist, dass der mindestens eine Parameter zur Beschreibung einer Degradation der Zugangsvorrichtung mindestens einen Energieparameter zur Beschreibung eines Energieverbrauchs der Zugangsvorrichtung bei der Verstellung des beweglichen Elements umfasst. Der Energieverbrauch bei der Verstellung kann ein einfach messbares Anzeichen für den Grad der Degradation bieten.

Eine weitere bevorzugte Ausführungsform des Verfahrens ist dadurch gekennzeichnet, dass der mindestens eine Energieparameter einen Schließenergieparameter zur Beschreibung eines Energieverbrauchs der Zugangsvorrichtung bei einem Schließvorgang der Zugangsvorrichtung umfasst. Entsprechend kann es sich bei der Verstellung des beweglichen Elements um eine Schließbewegung des beweglichen Elements handeln. Eine Erhöhung der benötigten Energie kann insbesondere durch eine stärkere Reibung bei der Verstellung des beweglichen Elements verursacht werden. In diesem Zusammenhang ist es bevorzugt, dass der Schließenergieparameter einen Reibungsverlust bei dem Schließvorgang der Zugangsvorrichtung beschreibt.

Prinzipiell können die Überlegungen zum Schließvorgang auch auf den Öffnungsvorgang angewandt werden. Gemäß einer bevorzugten Ausführungsform des Verfahrens ist vorgesehen, dass der mindestens eine Energieparameter einen Öffnungsenergieparameter zur Beschreibung eines Energieverbrauchs der Zugangsvorrichtung bei einem Öffnungsvorgang der Zugangsvorrichtung umfasst. Bevorzugt ist dann die Verstellung des beweglichen Elements eine Öffnungsbewegung des beweglichen Elements. Bevorzugt ist weiter, dass der Öffnungsenergieparameter einen Reibungsverlust bei dem Öffnungsvorgang der Zugangsvorrichtung beschreibt.

Es kann in diesem Zusammenhang auch mehr als ein Parameter zur Beschreibung der Degradation vorgesehen sein. Gemäß einer weiteren bevorzugten Ausführungsform des Verfahrens ist daher vorgesehen, dass die Soll-Zustandssignale basierend auf einer Vielzahl von Parametern zur Beschreibung einer Degradation der Zugangsvorrichtung ermittelt werden.

Bei der Zugangsvorrichtung kann es sich insbesondere um ein Türsystem handeln, wobei dann das bewegliche Element ein Türflügel sein kann. Ebenso kann es sich bei der Zugangsvorrichtung um ein Schiebetrittsystem handeln, wobei in diesem Fall das bewegliche Element ein Schiebetritt sein kann.

Grundsätzlich kann das Simulationsmodell einen beliebigen Ursprung haben. Eine weitere bevorzugte Ausführungsform des Verfahrens ist dadurch gekennzeichnet, dass das Simulationsmodell aus Konstruktionsdaten zur Beschreibung der Zugangsvorrichtung erzeugt wurde. Mit anderen Worten handelt es sich um Daten, ausgehend von denen die Zugangsvorrichtung ganz oder teilweise hergestellt werden könnte oder tatsächlich hergestellt wurde. Eine solche Herstellung ist ganz allgemein zu verstehen und kann die Produktion, den Zusammenbau, das Zusammenfügen oder das sonstige Verbinden von Einzelteilen umfassen. Diese Einzelteile bilden zumindest einen Teil der Zugangsvorrichtung und es kann sein, dass für diese Einzelteile charakterisierende Daten in den Konstruktionsdaten bereitgestellt werden. Ebenso kann es sein, dass basierend auf Vorgaben in den Konstruktionsdaten entsprechend spezifizierte Einzelteile hergestellt und dann zusammengefügt wurden.

Bei dem Simulationsmodell kann es sich um beliebige Daten, einschließlich spezieller formelhafter Beziehungen und spezieller numerischer Ansätze handeln, welche der rechnerischen Simulation der Zugangsvorrichtung dienen. Dabei reicht es aus, dass nur bestimmte Merkmale oder Messgrößen der Zugangsvorrichtung simuliert werden. Ebenso ist bei dieser Simulation nicht grundsätzlich eine bestimmte erzielte Genauigkeit erforderlich. Das Simulationsmodell kann einerseits festgelegte Berechnungsalgorithmen umfassen, welche dann lediglich durch variable Daten parametrisiert werden. Das Simulationsmodell kann aber auch sowohl hinsichtlich seiner Parameter als auch der Berechnungsansätze variabel sein. Das kann sowohl die Art betreffen, wie bestimmte physikalische Vorgänge rechnerisch nachgebildet werden, als auch die Auswahl von numerischen Lösungsansätzen für diese Nachbildungen betreffen. Neben den Steuersignalen kann das Simulationsmodell noch weitere Eingangsgrößen vorsehen und hier insbesondere die Ist-Zustandssignale. Gemäß einer bevorzugten Ausführungsform ist daher vorgesehen, dass auch die Ist-Zustandssignale zur rechnerischen Simulation der Zugangsvorrichtung und zur Ermittlung erwarteter Soll-Zustandssignale auf das physikalische Simulationsmodell angewandt werden.

Eine bevorzugte Ausführungsform ist dadurch gekennzeichnet, dass das Simulationsmodell mindestens eine Umsetzungstabelle zur Ermittlung der erwarteten Soll-Zustandssignale basierend auf den Steuersignalen, vorzugsweise auch basierend auf den Ist-Zustandssignalen, aufweist. Eine solche Umsetzungstabelle wird auch als Lookup-Tabelle bezeichnet. Sie erlaubt eine sehr schnelle und wenig ressourcenverbrauchende Ermittlung der Soll-Zustandssignale.

Grundsätzlich kann es sein, dass das Simulationsmodell nur aus den Konstruktionsdaten erzeugt wurde, dass also keinerlei Messungen oder Versuche an einer realen Zugangsvorrichtung in das Simulationsmodell eingeflossen sind. Gemäß einer bevorzugten Ausführungsform des Verfahrens ist jedoch vorgesehen, dass das Simulationsmodell durch Messungen an einem Exemplar der Zugangsvorrichtung ergänzt wurde, indem an dem Exemplar der Zugangsvorrichtung vor Befestigung an dem Fahrzeug Messungen durchgeführt wurden. Die Bezugnahme auf ein Exemplar der Zugangsvorrichtung verdeutlicht, dass die Messungen oder Versuche nicht notwendigerweise an derselben Zugangsvorrichtung - im Sinne desselben Exemplars - durchgeführt wurden, dessen Antrieb gemäß dem vorschlagsgemäßen Verfahren mit Steuersignalen angesteuert wird und dessen Zustand zum Erzeugen der Ist-Zustandssignale erfasst wird. Es reicht also aus, dass die Messungen oder Versuche an einer zu der tatsächlich betriebenen Zugangsvorrichtung gleichen Zugangsvorrichtung durchgeführt wurden.

Grundsätzlich kann das Simulationsmodell aus den Konstruktionsdaten erzeugt werden, welche der Herstellung der Zugangsvorrichtung insgesamt zugrunde lagen. Gemäß einer weiteren bevorzugten Ausführungsform des Verfahrens ist andererseits vorgesehen, dass die Konstruktionsdaten eine Kombination einzelner Konstruktionselemente aufweisen, dass den Konstruktionselementen ein jeweiliges Elementsimulationsmodell zur Beschreibung des Konstruktionselements zugeordnet ist und dass das Erzeugen des Simulationsmodells die Kombination der jeweiligen Elementsimulationsmodelle der Konstruktionselemente umfasst. In diesem Fall ist es weiter bevorzugt, dass die Zugangsvorrichtung Bauelemente aufweist, welche den Konstruktionselementen entsprechen. Mit anderen Worten wird das Simulationsmodell nicht ausgehend von den Konstruktionsdaten insgesamt erstellt, sondern zumindest teilweise von den Elementsimulationsmodellen der Konstruktionselemente, welche Bestandteil der Konstruktionsdaten sind. Die den Konstruktionselementen - als virtuelle Elemente in den Konstruktionsdaten - entsprechenden realen Bauelemente sind umfasst von der realen Zugangsvorrichtung. Durch diese bevorzugte Ausführungsform wird die Komplexität bei der Bestimmung des Simulationsmodells verringert, weil auf die jeweiligen Modelle der einzelnen Bestandteile zurückgegriffen werden kann.

Eine bevorzugte Ausführungsform des Verfahrens ist dadurch gekennzeichnet, dass zumindest einige der Elementsimulationsmodelle durch Anwendung von mechanischen und/oder elektrischen Formeln auf Elementkonstruktionsdaten des Konstruktionselements aus einem Programm für computergestützten Entwurf erhalten wurden. Mit anderen Worten beruhen die Elementsimulationsmodelle nicht auf Messungen oder Versuchen an den realen Bauelementen, sondern auf Berechnungen basierend auf den Eigenschaften des nur virtuellen Konstruktionselements. Auf diese Weise kann ein Elementsimulationsmodell verwendet werden noch bevor ein entsprechendes reales Bauelement hergestellt wurde. Bei dem obigen Programm kann es sich um ein Programm für computergestützten mechanischen und/oder elektrischen Entwurf handeln.

Grundsätzlich kann die Anpassung des Simulationsmodells zu beliebiger Zeit bezogen auf den eigentlichen Betrieb der Zugangsvorrichtung erfolgen. Gemäß einer bevorzugten Ausführungsform des Verfahrens ist jedoch vorgesehen, dass während eines laufenden Betriebs der Zugangsvorrichtung das Simulationsmodell angepasst wird.

Grundsätzlich können das Erzeugen der Steuersignale, die Anwendung auf das Simulationsmodell zur Ermittlung der erwarteten Soll-Zustandssignale und die Anpassung des Simulationsmodells in ein und derselben Rechenvorrichtung erfolgen. Diese Vorgänge können aber ebenso auf prinzipiell beliebig viele einzelne Rechenvorrichtungen verteilt werden. Gemäß einer weiteren bevorzugten Ausführungsform des Verfahrens ist speziell vorgesehen, dass das Fahrzeug eine elektronische Steuervorrichtung zur Ansteuerung der Zugangsvorrichtung mit den Steuersignalen sowie eine mit der Steuervorrichtung über ein Netzwerk verbundene Zentralrecheneinheit aufweist, dass die Steuersignale, vorzugsweise auch die Ist-Zustandssignale, über das Netzwerk an die Zentralrecheneinheit übertragen werden und dass die Zentralrecheneinheit die Steuersignale, vorzugsweise auch die Ist-Zustandssignale, auf das Simulationsmodell zur Ermittlung der erwarteten Soll-Zustandssignale anwendet und das Simulationsmodell anpasst.

Vorzugsweise ist die Zentralrecheneinheit an dem Fahrzeug angeordnet. Bevorzugt handelt es sich bei dem Netzwerk um ein lokales Netzwerk. Alternativ oder zusätzlich kann es sich um ein drahtloses Netzwerk handeln. Unter einem lokalen Netzwerk ist hier eine beliebige, insbesondere auch drahtlose, Verbindung zwischen zwei verschiedenen elektronischen Vorrichtungen zu verstehen. Mit anderen Worten geht das lokale Netzwerk über eine rein vorrichtungsinterne datentechnische Verbindung hinaus. Dabei kann das lokale Netzwerk eine beliebige Topologie aufweisen und insbesondere auch aus der direkten Verbindung von zwei Netzwercknoten bestehen. Bei einem drahtlosen Netzwerk im vorliegenden Sinne kann es sich auch um ein Netzwerk handeln, welches lediglich teilweise eine drahtlose Übertragung vorsieht. Es kann sich bei dem drahtlosen Netzwerk auch um ein Mobilfunknetzwerk handeln.

Grundsätzlich können die Ist-Zustandssignale auf beliebige Art und Weise zustande kommen. Eine bevorzugte Ausführungsform des Verfahrens ist dadurch gekennzeichnet, dass das Fahrzeug eine Messanordnung zum Erzeugen von Messsignalen basierend auf einer Messung an der Zugangsvorrichtung aufweist. Dabei kann es sich um beliebige Arten von Messungen und damit insbesondere um physikalische, mechanische oder elektrische Messungen handeln. Bevorzugt ist weiter, dass die Ist-Zustandssignale die Messsignale zumindest teilweise umfassen. Mit anderen Worten können solche Messsignale auch als solche als Ist-Zustandssignale verstanden werden. Alternativ oder zusätzlich kann es sein, dass die Ist-Zustandssignale zumindest teilweise basierend auf den Messsignalen erzeugt werden, und zwar insbesondere durch die Steuervorrichtung. In diesem Falle entsprechen zumindest einige Ist-Zustandssignale einer Weiterverarbeitung oder Auswertung der Messsignale.

Die obigen Ist-Zustandssignale können auch zumindest indirekt zur Erzeugung der Steuersignale verwendet werden, beispielsweise im Rahmen eines Regelkreises. Entsprechend ist eine weitere bevorzugte Ausführungsform des Verfahrens dadurch gekennzeichnet, dass auf der Steuervorrichtung ein Steuerprogramm abläuft, welches basierend auf Rückkopplungssignalen die Steuersignale zur Ansteuerung des Antriebs erzeugt. Diese Rückkopplungssignale können von den Ist-Zustandssignalen umfasst sein. Ebenso kann es sich bei den Rückkopplungssignalen um die obigen Messsignale handeln, sodass basierend auf den Messsignalen die Steuersignale zur Ansteuerung des Antriebs erzeugt werden. Bevorzugt ist ebenso, dass die Rückkopplungssignale ein Kodiersignal zur Angabe einer Position des beweglichen Elements umfassen oder aus dem Kodiersignal bestehen.

Bevorzugt ist, dass die Anpassung des Simulationsmodells zeitversetzt zu der Erkennung des Hinderniszustands erfolgt. Auf diese Weise können Rechenressourcen gleichmäßiger eingesetzt werden.

Ein solcher Zeitversatz erleichtert auch die Berücksichtigung mehrerer Zugangsvorrichtungen für die Anpassung des jeweiligen Simulationsmodells durch eine einzelne Zentralrecheneinheit. Daher ist eine weitere bevorzugte Ausführungsform des Verfahrens dadurch gekennzeichnet, dass für die Mehrzahl von an dem Fahrzeug befestigten Zugangsvorrichtungen jeweils unterschiedliche Zeitversatzdauern zwischen der jeweiligen Erkennung des Hinderniszustands und der Anpassung des Simulationsmodells vorgesehen sind. Häufig erfolgt die Verstellung des jeweiligen beweglichen Elements der Zugangsvorrichtungen nämlich im Wesentlichen gleichzeitig, beispielsweise beim Erreichen einer Haltestelle auf der Strecke eines Fahrzeugs des öffentlichen Personenverkehrs. Nach einer solchen im Wesentlichen gleichzeitigen Verstellung folgen regelmäßig auch längere Zeiträume, in denen keine solche Verstellung erfolgt, so etwa während einer Fahrt des Fahrzeugs des öffentlichen Personenverkehrs.

Grundsätzlich kann es sich bei den Steuersignalen um beliebige Signale zur Ansteuerung des Antriebs handeln. So kann es sich etwa um digitale Signale zur Ansteuerung des Antriebs handeln. Gemäß einer weiteren bevorzugten Ausführungsform des Verfahrens ist vorgesehen, dass die Steuersignale eine Motorspannung zum Anlegen an den elektrischen Antrieb umfassen. Vorzugsweise bestehen die Steuersignale aus der Motorspannung.

Ebenso kann es sich sowohl bei den Ist-Zustandssignalen als auch bei den Soll-Zustandssignalen grundsätzlich um beliebige Arten von Signalen handeln. Hier ist es bevorzugt, dass die Ist-Zustandssignale und die Soll-Zustandssignale einen durch den elektrischen Antrieb fließenden Motorstrom umfassen. Dabei handelt es sich einerseits um einen tatsächlich gemessenen Motorstrom und andererseits um einen erwarteten Motorstrom.

Eine bevorzugte Ausführungsform des Verfahrens ist dadurch gekennzeichnet, dass der erfasste Zustand der Zugangsvorrichtung einen in Bewegungsphasen unterteilten Bewegungsablauf bei der Verstellung des beweglichen Elements umfasst und dass der Vergleich zwischen dem Ist-Zustandssignal und dem erwarteten Soll-Zustandssignal basierend auf jeweils unterschiedlichen charakteristischen Signalmerkmalen für mindestens eine Bewegungsphase erfolgt. Entsprechend ist es bevorzugt, dass auch die Ermittlung der erwarteten Soll-Zustandssignale auf den Bewegungsphasen des Bewegungsablaufs basiert. Wenn ein charakteristischer Verlauf eines Signals über eine Zeitspanne erwartet wird, so kann eine Abweichung zwischen dem Ist-Zustandssignal und dem erwarteten Soll-Zustandssignal präziser erkannt werden. Es kann beispielsweise sein, dass der Bewegungsablauf in eine Beschleunigungsphase, eine kontinuierliche Phase und eine Bremsphase bei der Verstellung des beweglichen Elements unterteilt ist. Indem auf typische Verläufe bei dem jeweiligen Phasenübergang geachtet wird, kann z. B. der verzögerte oder verfrühte Beginn einer solchen Phase wirksam erkannt werden. Ein solcher Ansatz ist einfacher umzusetzen als etwa ein umfassender Vergleich über die gesamte Zeitspanne des Bewegungsablaufs.

Eine weitere bevorzugte Ausführungsform des Verfahrens ist dadurch gekennzeichnet, dass das Erkennen des Hinderniszustands bei der Verstellung des beweglichen Elements auf den Bewegungsphasen des Bewegungsablaufs basiert. Anders ausgedrückt wird bei dem Vergleich zwischen den Ist-Zustandssignalen und den zugehörigen Soll-Zustandssignalen berücksichtigt, zu welcher Bewegungsphase die verglichenen Ist-Zustandssignale und Soll-Zustandssignale gehören.

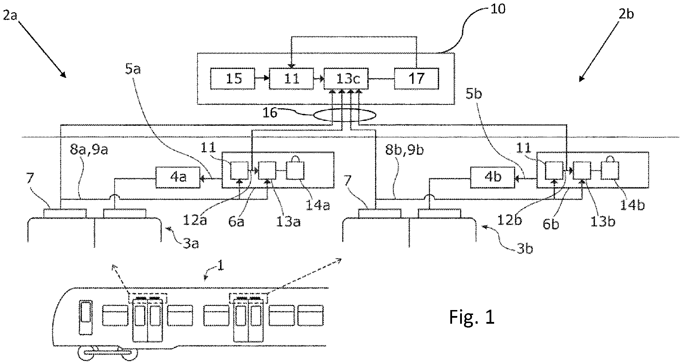

Weitere Einzelheiten, Merkmale, Ziele und Vorteile der vorliegenden Erfindung werden nachfolgend anhand der lediglich ein Ausführungsbeispiel wiedergebenden Zeichnung erläutert. In der Zeichnung zeigt
- Fig. 1: schematisch ein Fahrzeug mit einer Zugangsvorrichtung zur Ausführung eines Ausführungsbeispiels des vorschlagsgemäßen Verfahrens.

Bei dem in der Fig. 1 dargestellten Fahrzeug 1 handelt es sich um ein Schienenfahrzeug des öffentlichen Personenverkehrs mit einer Vielzahl von an dem Fahrzeug 1 befestigten Fahrgasttüren, von denen hier zwei beispielhaft als Zugangsvorrichtungen 2a, b wiedergegeben sind. Jede Zugangsvorrichtung 2a, b umfasst jeweils ein bewegliches Element 3a, b, bei welchem es sich hier um einen Türflügel handelt. Daneben umfasst jede Zugangsvorrichtung 2a, b einen elektrischen Antrieb 4a, b - hier jeweils ein Elektromotor - zum Verstellen des Türflügels.

Die elektrischen Antriebe 4a, b werden jeweils mit Steuersignalen 5a, b angesteuert, welche von einer jeweiligen elektronischen Steuervorrichtung 6a, b des Fahrzeugs 1 ausgehen. Im vorliegenden Fall handelt es sich bei den Steuersignalen 5a, b um eine an den Antrieb 4a, b angelegte Motorspannung. Das Fahrzeug weist ferner eine Messanordnung 7 mit einer Messvorrichtung an jeder Zugangsvorrichtung 2a, b auf, welche Messvorrichtungen jeweilige Messsignale 8a, b erzeugen, bei welchen Messsignalen 8a, b es sich hier jeweils um einen Motorstrom handelt. Diese Messsignale 8a, b bilden hier gleichzeitig Ist-Zustandssignale 9a, b, die auf diese Weise einen erfassten Zustand der jeweiligen Zugangsvorrichtung 2a, b wiedergeben.

In den elektronischen Steuervorrichtungen 6a, b findet eine Simulation der jeweiligen Zugangsvorrichtung 2a, b statt. Dabei werden die Steuersignale 5a, b und die Ist-Zustandssignale 9a, b auf ein physikalisches Simulationsmodell 11 angewandt, welche der rechnerischen Simulation der jeweiligen Zugangsvorrichtung 2a, b dient. Vorliegend erfolgt die rechnerische Simulation durch die Anwendung einer Vielzahl von Lookup-Tabellen des Simulationsmodells 11. Durch die Anwendung der Steuersignale 5a, b und der Ist-Zustandssignale 9a, b auf das Simulationsmodell 11 werden die Soll-Zustandssignale 12a, b ermittelt.

Die Lookup-Tabellen und damit das Simulationsmodell 11 wurden basierend auf Daten ermittelt, welche in der Zentralrecheneinheit 10 hinterlegt sind. Speziell wurde das Simulationsmodell 11 zunächst aus Konstruktionsdaten 15 erzeugt, wobei basierend auf einem ersten Teil der Konstruktionsdaten 15 die Zugangsvorrichtungen 2a, b hergestellt wurde. Die Konstruktionsdaten 15 wiederum setzen sich aus einzelnen, hier nicht dargestellten Konstruktionselementen zusammen, und zwar speziell für jedes einzelne elektrische oder mechanische Bauteil der Zugangsvorrichtungen 2a, b. Das Simulationsmodell 11 und damit auch die Lookup-Tabellen wurden dann durch die dieser Kombination der Konstruktionselemente entsprechenden Elementsimulationsmodelle erzeugt.

Anschließend wurde das Simulationsmodell 11 durch Messungen an den hergestellten Exemplaren der Zugangsvorrichtungen 2a, b angepasst.

Die oben genannten, erwarteten Soll-Zustandssignale 12a, b werden mit den Ist-Zustandssignalen 9a, b in den Steuervorrichtungen 6a, b verglichen und je nach Ergebnis des Vergleichs wird erkannt, ob bei der Verstellung des jeweiligen beweglichen Elements 3a, b ein Hindernis vorlag oder nicht. Auf das Vorliegen eines Hindernisses wird insbesondere dann erkannt, wenn die Abweichung zwischen den Ist-Zustandssignalen 9a, b und den Soll-Zustandssignalen 12a, b einen Grenzwert überschreitet. Dieser Vergleichsvorgang ist in der Fig. 1 durch eine Vergleichsblock 13a, b und das Erkennen des Hinderniszustands als Ausgabeblock 14a, b schematisch dargestellt. Für den Fall, dass das Vorliegen eines Hindernisses erkannt wird, erfolgt eine Verstellung des beweglichen Elements 3a, b in die jeweils umgekehrte Bewegungsrichtung, sodass eine Befreiung von dem Hindernis eintritt.

Neben der Bestimmung des Instandhaltungszustands findet eine weitere Auswertung der Ist-Zustandssignalen 9a, b und der zugehörigen Soll-Zustandssignalen 12a, b statt, zu welchem Zweck die Ist-Zustandssignale 9a, b und die Soll-Zustandssignale 12a, b auch der Zentralrecheneinheit 10 zugeführt werden, welche beabstandet zu dem Fahrzeug 1 angeordnet ist. Die Zentralrecheneinheit 10 ist nachrichtentechnisch über ein drahtloses Netzwerk 16 mit den Steuervorrichtungen 6a, b gekoppelt. Auch die Konstruktionsdaten 15 sind als in der Zentralrecheneinheit 10 hinterlegt dargestellt. In der Zentralrecheneinheit 10 findet dann zunächst ein Vergleich der Ist-Zustandssignale 9a, b und der Soll-Zustandssignale 12a, b statt, was in der Fig. 1 als Vergleichsblock 13c dargestellt ist. In diesem Vergleich wird hier auch das Simulationsmodell 11 und insbesondere seine aktuelle Parametrierung hinsichtlich der Degradation berücksichtigt. Die Auswertung des Vergleichs ist als Auswerteblock 17 dargestellt.

Bei dieser Auswertung wird die Abweichung zwischen den Ist-Zustandssignalen 9a, b und den Soll-Zustandssignalen 12a, b mit einer Vielzahl von gestaffelten Grenzwerten verglichen, wobei jeder Grenzwert jeweils ein vordefiniertes Kriterium bildet. Je nach überschrittenem Grenzwert und damit erfülltem Kriterium erfolgt eine Anpassung des Simulationsmodells 11, wobei es auch bei einer hinreichend geringen Abweichung sein kann, dass das Simulationsmodell 11 bei diesem Vergleich nicht angepasst wird.

Speziell definiert jedes erfüllte Kriterium einen Degradationszustand der Zugangsvorrichtung 2a, b, welcher zwar zu einer beobachtbaren Verhaltensänderung, jedoch noch nicht an sich fehlerhaft ist. Jedem Degradationszustand ist ein Parameter zugeordnet. Die Anwendung dieses Parameters auf das Simulationsmodell 11 führt dazu, dass es die durch den Parameter angezeigte Degradation berücksichtigt und sich so anpasst, dass die ermittelten Soll-Zustandssignale 12a, b der Degradation gemäß Parameter entsprechen.

Nach einer solchen Anpassung des Simulationsmodells 11 werden regelmäßig sowohl die Kriterien zum Erkennen eines Hinderniszustands als auch die Kriterien zur Bestimmung eines weiter fortschreitenden Degradationszustands angepasst. Auf diese Weise bildet das Simulationsmodell 11 einen sogenannten digitalen Zwilling der Zugangsvorrichtungen 2a, b. Das angepasste Simulationsmodell 11 mit den ebenfalls angepassten Kriterien wird anschließend von der Zentralrecheneinheit 10 an die Steuervorrichtungen 6a, b übermittelt.

## Patentansprüche

1. Verfahren zur Hinderniserkennung bei einer Zugangsvorrichtung (2a, b) eines Fahrzeugs (1), insbesondere eines Fahrzeugs (1) des öffentlichen Personenverkehrs, wobei die Zugangsvorrichtung (2a, b) ein bewegliches Element (3a, b) und einen elektrischen Antrieb (4a, b) zum Verstellen des beweglichen Elements (3a, b) umfasst und an dem Fahrzeug (1) befestigt ist, wobei der Antrieb (4a, b) mit Steuersignalen (5a, b) zum Verstellen des beweglichen Elements (3a, b) angesteuert wird, wobei basierend auf einem erfassten Zustand der Zugangsvorrichtung (2a, b) Ist-Zustandssignale (9a, b) zur Beschreibung des Zustands erzeugt werden, wobei die Steuersignale (5a, b) auf ein physikalisches Simulationsmodell (11) zur rechnerischen Simulation der Zugangsvorrichtung (1) und zur Ermittlung erwarteter Soll-Zustandssignale (12a, b) angewandt werden und wobei basierend auf einem Vergleich zwischen den Ist-Zustandssignalen (9a, b) und zugehörigen Soll-Zustandssignalen (12a, b) ein Hinderniszustand bei der Verstellung des beweglichen Elements (3a, b) erkannt wird und wobei basierend auf den Ist-Zustandssignalen (9a, b) und den zugehörigen Soll-Zustandssignalen das Simulationsmodell (11) angepasst wird.

2. Verfahren nach Anspruch 1, **dadurch gekennzeichnet, dass** das Simulationsmodell (11) ein parametriertes Simulationsmodell (10) ist, sodass die Soll-Zustandssignale (12a, b) basierend auf mindestens einem Parameter zur Beschreibung einer Degradation der Zugangsvorrichtung (1) ermittelt werden, vorzugsweise, dass der mindestens eine Parameter zur Beschreibung einer Degradation der Zugangsvorrichtung (1) mindestens einen Energieparameter zur Beschreibung eines Energieverbrauchs der Zugangsvorrichtung (1) bei der Verstellung des beweglichen Elements (3a, b) umfasst.

3. Verfahren nach Anspruch 2, **dadurch gekennzeichnet, dass** der mindestens eine Energieparameter einen Schließenergieparameter zur Beschreibung eines Energieverbrauchs der Zugangsvorrichtung (1) bei einem Schließvorgang der Zugangsvorrichtung (1) umfasst, vorzugsweise, dass der Schließenergieparameter einen Reibungsverlust bei dem Schließvorgang der Zugangsvorrichtung (1) beschreibt.

4. Verfahren nach Anspruch 2 oder 3, **dadurch gekennzeichnet, dass** der mindestens eine Energieparameter einen Öffnungsenergieparameter zur Beschreibung eines Energieverbrauchs der Zugangsvorrichtung (1) bei einem Öffnungsvorgang der Zugangsvorrichtung (1) umfasst, vorzugsweise, dass der Öffnungsenergieparameter einen Reibungsverlust bei dem Öffnungsvorgang der Zugangsvorrichtung (1) beschreibt.

5. Verfahren nach einem der Ansprüche 1 bis 4, **dadurch gekennzeichnet, dass** die Soll-Zustandssignale (12a, b) basierend auf einer Vielzahl von Parametern zur Beschreibung einer Degradation der Zugangsvorrichtung (1) ermittelt werden.

6. Verfahren nach einem der Ansprüche 1 bis 5, **dadurch gekennzeichnet, dass** das Simulationsmodell (11) aus Konstruktionsdaten (15) zur Beschreibung der Zugangsvorrichtung (2a, b) erzeugt wurde.

7. Verfahren nach Anspruch 6, **dadurch gekennzeichnet, dass** das Simulationsmodell (11) durch Messungen an einem Exemplar der Zugangsvorrichtung (2a, b) ergänzt wurde, indem an dem Exemplar der Zugangsvorrichtung (2a, b) vor Befestigung an dem Fahrzeug (1) Messungen durchgeführt wurden.

8. Verfahren nach Anspruch 6 oder 7, **dadurch gekennzeichnet, dass** die Konstruktionsdaten (15) eine Kombination einzelner Konstruktionselemente aufweisen, dass den Konstruktionselementen ein jeweiliges Elementsimulationsmodell zur Beschreibung des Konstruktionselements zugeordnet ist und dass das Erzeugen des Simulationsmodells (11) die Kombination der jeweiligen Elementsimulationsmodelle der Konstruktionselemente umfasst.

9. Verfahren nach Anspruch 8, **dadurch gekennzeichnet, dass** zumindest einige der Elementsimulationsmodelle durch Anwendung von mechanischen und/oder elektrischen Formeln auf Elementkonstruktionsdaten des Konstruktionselements aus einem Programm für computergestützten Entwurf, insbesondere einem Programm für computergestützten mechanischen und/oder elektrischen Entwurf, erhalten wurden.

10. Verfahren nach einem der Ansprüche 1 bis 9, **dadurch gekennzeichnet, dass** das Fahrzeug (1) eine elektronische Steuervorrichtung (6a, b) zur Ansteuerung der Zugangsvorrichtung (2a, b) mit den Steuersignalen (5a, b) sowie eine mit der Steuervorrichtung (6a, b) über ein Netzwerk, insbesondere lokales Netzwerk und/oder drahtloses Netzwerk (16), verbundene Zentralrecheneinheit (10) aufweist, dass die Steuersignale (5a, b), vorzugsweise auch die Ist-Zustandssignale (9a, b), über das Netzwerk an die Zentralrecheneinheit (10) übertragen werden und dass die Zentralrecheneinheit (10) die Steuersignale (5a, b), vorzugsweise auch die Ist-Zustandssignale (9a, b), auf das Simulationsmodell (11) zur Ermittlung der erwarteten Soll-Zustandssignale (12a, b) anwendet und das Simulationsmodell (11) anpasst.

11. Verfahren nach Anspruch 10, **dadurch gekennzeichnet, dass** das Fahrzeug (1) eine Mehrzahl von an dem Fahrzeug (1) befestigten Zugangsvorrichtungen (2a, b) mit einer jeweiligen Steuervorrichtung (8a, b) umfasst und dass die Steuersignale (5a, b), vorzugsweise auch die Ist-Zustandssignale (9a, b), der Mehrzahl von Zugangsvorrichtungen (2a, b) über das lokale Netzwerk an die Zentralrecheneinheit (10) zur Ermittlung der jeweiligen erwarteten Soll-Zustandssignale (12a, b) und zur Bestimmung des Instandhaltungszustands der jeweiligen Zugangsvorrichtung (2a, b) übertragen werden.

12. Verfahren nach einem der Ansprüche 1 bis 11, **dadurch gekennzeichnet, dass** das Fahrzeug (1) eine Messanordnung (7) zum Erzeugen von Messsignalen (8a, b) basierend auf einer Messung an der Zugangsvorrichtung (2a, b) aufweist, vorzugsweise, dass die Ist-Zustandssignale (9a, b) die Messsignale (8a, b) zumindest teilweise umfassen und/oder dass die Ist-Zustandssignale (9a, b) zumindest teilweise basierend auf den Messsignalen (8a, b), insbesondere durch die Steuervorrichtung (6a, b), erzeugt werden.

13. Verfahren nach Anspruch 11 oder 12, **dadurch gekennzeichnet, dass** auf der Steuervorrichtung (8a, b) ein Steuerprogramm abläuft, welches basierend auf Rückkopplungssignalen, welche vorzugsweise von den Ist-Zustandssignalen (9a, b) umfasst sind, insbesondere basierend auf den Messsignalen (8a, b), die Steuersignale (5a, b) zur Ansteuerung des Antriebs (4a, b) erzeugt, weiter vorzugsweise, dass die Rückkopplungssignale ein Kodiersignal zur Angabe einer Position des beweglichen Elements (3a, b) umfassen, weiter insbesondere aus dem Kodiersignal bestehen.

14. Verfahren nach einem der Ansprüche 1 bis 13, **dadurch gekennzeichnet, dass** der erfasste Zustand der Zugangsvorrichtung (2a, b) einen in Bewegungsphasen unterteilten Bewegungsablauf bei der Verstellung des beweglichen Elements (3a, b) umfasst und dass der Vergleich zwischen dem Ist-Zustandssignal (9a, b) und dem erwarteten Soll-Zustandssignal basierend auf jeweils unterschiedlichen charakteristischen Signalmerkmalen für mindestens eine Bewegungsphase erfolgt.

15. Verfahren nach Anspruch 14, **dadurch gekennzeichnet, dass** das Erkennen des Hinderniszustands bei der Verstellung des beweglichen Elements (3a, b) auf den Bewegungsphasen des Bewegungsablaufs basiert.
